# EUROPÄISCHE PATENTSCHRIFT

(11) **EP 2 895 731 B1**
(45) Veröffentlichungstag und Bekanntmachung des Hinweises auf die Patenterteilung: **07.03.2018**
(21) Anmeldenummer: 13739660.2
(22) Anmeldetag: 17.07.2013
(51) Int. Cl.: F02M 55/02, F02M 55/04, F16L 27/10

(54) **HALTER ZUR BEFESTIGUNG EINES ROHRFÖRMIGEN BAUTEILS AN EINER ANBAUSTRUKTUR**
HOLDER FOR FASTENING A TUBULAR COMPONENT TO AN ADD-ON STRUCTURE
SUPPORT DE FIXATION D'UN COMPOSANT TUBULAIRE À UNE STRUCTURE DE MONTAGE

(30) Priorität: 13.09.2012 DE 102012216236
(43) Veröffentlichungstag der Anmeldung: 22.07.2015
(73) Patentinhaber: Robert Bosch GmbH, 70442 Stuttgart (DE)
(72) Erfinder: REHWALD, Andreas, 74321 Bietigheim-Bissingen (DE)
(86) Internationale Anmeldenummer: PCT/EP2013/065055
(87) Internationale Veröffentlichungsnummer: WO 2014/040777

(56) Entgegenhaltungen:
- EP-A2- 1 701 076
- WO-A1-2008/064970
- DE-A1- 3 708 864
- DE-B3-102007 020 498
- DE-U1- 29 618 513
- US-A- 2 404 531
- US-A- 5 261 633
- US-B2- 7 591 246

## Beschreibung

### Stand der Technik

Die Erfindung betrifft eine Brennstoffeinspritzanlage mit einem Halter zur Befestigung eines rohrförmigen Bauteils, insbesondere eines Verteilerrohrs eines Brennstoffverteilers, an einer Anbaustruktur. Speziell betrifft die Erfindung das Gebiet der Brennstoffeinspritzanlagen von Brennkraftmaschinen.

Aus der US 7,591,246 B2 ist ein schwingungsisoliertes Brennstoffverteilungssystem für eine Brennkraftmaschine bekannt. In einer möglichen, bekannten Ausgestaltung sind ein erstes und ein zweites Halteteil vorgesehen. Um ein rohrförmiges Verteilerrohr ist ein ringförmiges Isolationsteil gelegt, das im montierten Zustand zwischen Aufnahmen der Halteelemente angeordnet ist, wobei über das Isolationselement die Halteelemente das Verteilerrohr halten, wobei ein Kontakt zwischen dem Verteilerrohr und den Halteelementen verhindert ist. Die Befestigung erfolgt mit einem Befestigungsmittel, das sich durch die Halteelemente erstreckt und am Zylinderkopf fixiert ist.

Die aus der US 7,591,246 B2 bekannte Ausgestaltung zum Befestigen des Verteilerrohrs an dem Zylinderkopf der Brennkraftmaschine hat den Nachteil, dass bei der Montage eine Vielzahl von Einzelteilen geeignet an dem Verteilerrohr positioniert und dann in geeigneter Position fixiert werden muss. Außerdem werden die Halteelemente direkt mit einer großen Befestigungskraft beaufschlagt. Beim Festziehen des Befestigungsmittels kann es außerdem über den Schraubenkopf vermittelt zu einer Relativbewegung zwischen den Halteelementen kommen, die eine Quetschung des Isolierelements bedingt.

### Offenbarung der Erfindung

Die erfindungsgemäße Brennstoffeinspritzanlage mit den Merkmalen des Anspruchs 1 hat den Vorteil, dass ein verbesserter Aufbau ermöglicht ist. Speziell kann eine Montage vereinfacht werden.

In vorteilhafter Weise können die erste Halbschale und die zweite Halbschale geometrisch zumindest näherungsweise bleich ausgestaltet sein. Allerdings ist auch eine unsymmetrische Ausgestaltung möglich. Die erste Halbschale und die zweite Halbschale sind hierbei in vorteilhafter Weise mittels eines Filmscharniers miteinander verbunden. Dadurch bilden diese gewissermaßen ein Bauteil, was die Handhabung und die Montage vereinfacht. Die verbundenen Halbschalen können nämlich dann um das Verteilerrohr geklappt und über eine Schraube fixiert werden. Durch die in den Unteransprüchen aufgeführten Maßnahmen sind vorteilhafte Vileiterbildungen der im Anspruch 1 angegebenen Brennstoffeinspritzanlage möglich.

Durch den Halter kann eine kostengünstige Lösung zur Befestigung des Verteilerrohrs und somit des Brennstoffverteilers an beispielsweise einem Zylinderkopf der Zylindermaschine erfolgen. Hierbei ist eine Vormontage des Halters auf das Verteilerrohr möglich. Damit kann die Brennstoffeinspritzanlage einschließlich aller Anbauteile mit einem oder mehreren Haltern und Schrauben im Motorenwerk eingesetzt und verschraubt werden. Hierbei kann die genaue Positionierung der Brennstoffeinspritzventile in ihren Aufnahmebohrungen ermöglicht werden.

Besonders vorteilhaft ist diesbezüglich das Anspritzen des Dämpfungselements an die zugehörige Halbschale. Dadurch ergibt sich eine feste Verbindung des Dämpfungselements mit der Halbschale, die die Handhabung und den Transport, beispielsweise bei einer Herstellung als Vorbauteil, sowie eine eventuelle Prüfung vereinfacht.

Allerdings kann insbesondere bei der Ausgestaltung des Dämpfungselements aus speziellen Materialien auch das Einlegen des Dämpfungselements vorteilhaft oder auch erforderlich sein. Insbesondere bei einer Ausgestaltung des Dämpfungselements aus einem Elastomer, der nicht im Kunststoffspritzgussverfahren als zweite Komponente angespritzt werden kann, ist ein Einlegen in die Halbschale möglich. Speziell können hierbei ein oder mehrere Dämpfungselemente in Form von Gummistreifen in die jeweilige Halbschale eingelegt werden.

Wenn das elastisch verformbare Dämpfungselement der ersten Halbschale an den Haltebereich der ersten Halbschale angespritzt ist, ist dieses Dämpfungselement bei der Montage stets optimal bezüglich der ersten Halbschale positioniert. Außerdem vereinfacht sich die Handhabung, da das Dämpfungselement somit nicht in einem ersten Schritt positioniert und in einem zweiten Schritt über einen Halter fixiert werden muss. Entsprechendes gilt für das Dämpfungselement der zweiten Halbschale. Außerdem ergänzen sich die Dämpfungselemente der Halbschale nach der Montage in optimaler Weise. Eine gegebenenfalls auftretende Relativbewegung zwischen den Halbschalen, sofern diese überhaupt möglich ist, wirkt sich außerdem prinzipbedingt nicht in einer Quetschung der Dämpfungselemente aus. Damit ist die Funktionsweise der Schwingungsisolierung verbessert. Somit liegt ein Vorteil in der Einteiligkeit der jeweiligen Halbschale mit dem angespritzten Dämpfungselement zur Geräuschisolation. Die Halbschalen können hierbei auf einem Kunststoff basieren. Die Dämpfungselemente können aus einem Elastomer gebildet sein.

Durch die Ausgestaltung der Dämpfungselemente aus viskoelastische Elastomereinlagen kann eine sehr gut wirksame Geräuschentkopplung erzielt werden, wodurch die Übertragung in die Anbaustruktur sehr stark reduziert ist. Auf das Verteilerrohr wirkende Lasten können durch die Realisierung großer Kontaktflächen sowie Elastomervolumina gut aufgenommen werden. Über die Variation von Fläche und Volumen kann die Steifigkeit der Verbindung optimal an die Belastungen angepasst werden. Die bei einem starr verschrauben System auftretenden thermischen Spannungen werden durch die Elastomerlagerung vermieden, wodurch das Verteilerrohr weniger belastet wird und leichter gebaut werden kann. Der Einsatz der vorzugsweise aus Kunststoff bestehenden Halbschalen erfolgt vorzugsweise in Verbindung mit einer festen Anbindung der Brennstoffeinspritzventile an das Verteilerrohr. Hierbei sind vorzugsweise mehrere Halter zur Befestigung eines Verteilerrohrs vorgesehen.

Vorteilhaft ist es, dass das elastisch verformbare Dämpfungselement, das an dem Haltebereich der ersten Halbschale angespritzt oder in den Haltebereich eingelegt ist, teilringförmig ausgestaltet ist und/oder streifen- oder lippenförmig oder vollflächig ausgestaltet ist und/oder dass das elastisch verformbare Dämpfungselement, das an den Haltebereich der zweiten Halbschale angespritzt oder in den Haltebereich eingelegt ist, teilringförmig ausgestaltet ist und/oder streifen- oder lippenförmig oder vollflächig ausgestaltet ist. Ferner ist es hierbei von Vorteil, dass das elastisch verformbare Dämpfungselement, das an den Haltebereich der ersten Halbschale angespritzt ist, und das elastisch verformbare Dämpfungselement, das an den Haltebereich der zweiten Halbschale angespritzt ist, das rohrförmige Bauteil ringförmig umschließen, wenn die erste Halbschale und die zweite Halbschale zum Befestigen des rohrförmigen Bauteils aneinander gefügt sind. Hierdurch kann eine zuverlässige Befestigung des rohrförmigen Bauteils an der Brennkraftmaschine oder einer sonstigen Anbaustruktur erzielt werden. Insbesondere kann eine zuverlässige Befestigung auch entlang der Längsachse des rohrförmigen Bauteils erzielt werden. Außerdem ergibt sich eine verbesserte Schwingungsdämpfung.

Vorteilhaft ist es auch, dass an den Haltebereich der ersten Halbschale mehrere elastisch verformbare Dämpfungselemente angespritzt und/ oder in den Haltebereich eingelegt sind und/oder dass an den Haltebereich der zweiten Halbschale mehrere elastisch verformbare Dämpfungselemente angespritzt und/oder in den Haltebereich eingelegt sind. Insbesondere können dadurch jeweils zwei oder mehrere streifen- oder lippenförmige Dämpfungselemente an eine Halbschale angespritzt sein.

Außerdem ist es vorteilhaft, dass eine metallische Hülse in der ersten Halbschale angeordnet und umspritzt ist und dass eine metallische Hülse in der zweiten Halbschale angeordnet und umspritzt ist. Für die Durchführung der Schraube können somit als metallische Einleger in den Halbschalen dienende metallische Hülsen eingesetzt werden, die umspritzt sind. Die Vormontage der Schraube in Vormontageposition erfolgt wahlweise über eine mit angespritzte Haltegeometrie aus der Elastomerkomponente des Dämpfungselements oder aus der Kunststoffkomponente der Halbschale, insbesondere in Form von Haltestegen. Somit kann die Schraube in vorteilhafter Weise in der metallischen Hülse der ersten Halbschale durch einen Haltesteg der ersten Halbschale oder durch eine Anspritzung aus dem Werkstoff des Dämpfungselements in einer Vormontageposition positioniert werden. Dies ermöglicht eine weitere Vereinfachung der Handhabung und der Montage des Halters an dem Verteilerrohr.

Möglich ist auch eine Ausführung mit zwei Schrauben je Halter zur Befestigung des rohrförmigen Bauteils auf dem Zylinderkopf oder einer anderen Anbaustruktur. Diese Anordnung ermöglicht in Bezug auf den jeweiligen Anwendungsfall eine bessere Verteilung der Lasten auf zwei Schrauben. Somit ist es vorteilhaft, dass eine weitere metallische Hülse in der ersten Halbschale angeordnet und umspritzt ist, dass die metallische Hülse und die weitere metallische Hülse der ersten Halbschale bezüglich des elastischen Dämpfungselements gegenüberliegend zueinander angeordnet sind, dass eine weitere metallische Hülse in der zweiten Halbschale angeordnet und umspritzt ist und dass die metallische Hülse und die weitere metallische Hülse der zweiten Halbschale bezüglich des elastischen Dämpfungselements gegenüberliegend zueinander angeordnet sind.

Durch nur formende Fertigungsverfahren besteht außerdem die Möglichkeit, dass die Halterstruktur den zur Verfügung stehenden Bauraum optimal nutzt beziehungsweise ausfüllt. Durch die Formgebung im Spritzgussverfahren kann die Ausgestaltung der Halbschalen so erfolgen, dass die Formsteifigkeit der auftretenden Belastung angepasst ist. Dies ist insbesondere durch Versteifungen möglich. Speziell können Versteifungsrippen vorgesehen sein, die zu einer Minderung der Bauteilspannungen führen.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 eine Brennstoffeinspritzanlage mit einem Verteilerrohr und mehreren Haltern, die zum Befestigen des Verteilerrohrs an einer Anbaustruktur dienen, in einer schematischen, räumlichen Darstellung entsprechend einer möglichen Ausgestaltung der Erfindung;
Fig. 2 eine auszugsweise, räumliche Darstellung der in Fig. 1 gezeigten Brennstoffeinspritzanlage entsprechend einem ersten Beispiel während der Montage;
Fig. 3 eine Halbschale des in Fig. 2 dargestellten Halters in einer räumlichen Garstellung entsprechend einem Ausführungsbeispiel der Erfindung und
Fig. 4 die in Fig. 2 auszugsweise dargestellte Brennstoffeinspritzanlage entsprechend einem dritten Beispiel

### Ausführungsformen

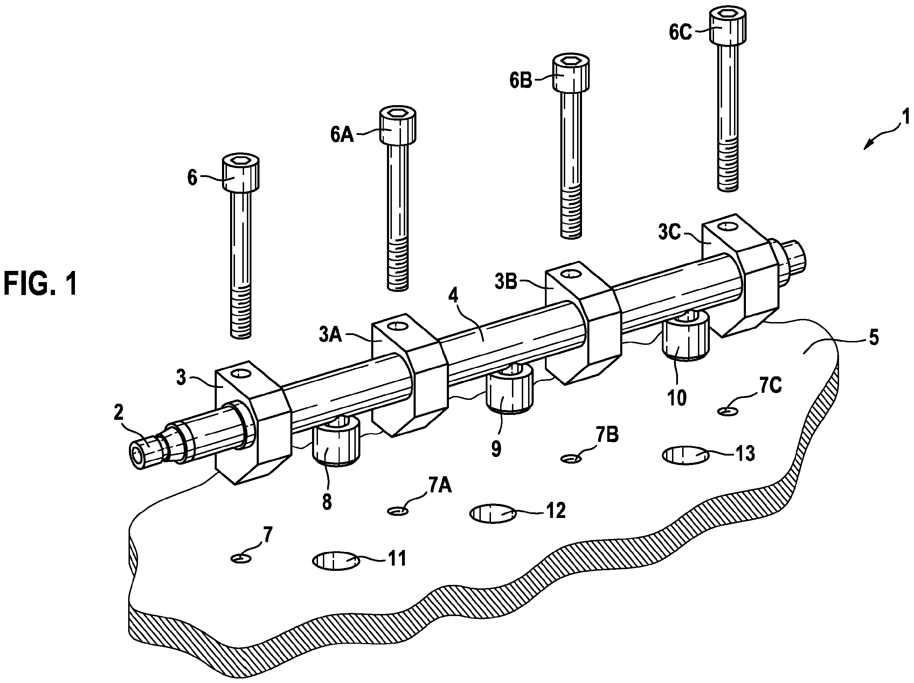

Fig. 1 zeigt eine Brennstoffeinspritzanlage 1 mit einem Brennstoffverteiler 2 und mehreren Haltern 3, 3A, 3B, 3C, die zum Befestigen eines Verteilerrohrs 4 des Brennstoffverteilers 2 an einer schematisch dargestellten Anbaustruktur 5 dienen, in einer schematischen, räumlichen Darstellung entsprechend einer möglichen Ausgestaltung. Der Halter 3 umfasst hierbei eine Schraube 6, mittels der der Halter 3 an der Anbaustruktur 5 anschraubbar ist. Entsprechend sind weitere Schrauben 6A, 6B, 6C der Halter 3A, 3B, 3C vorgesehen. Die Anbaustruktur 5 weist hierfür geeignete Gewindebohrungen 7, 7A, 7B, 7C auf. An dem Verteilerrohr 4 sind in diesem Ausführungsbeispiel drei Tassen 8, 9, 10 angebracht, die zum Anschließen von nicht dargestellten Brennstoffeinspritzventilen dienen. Solche Brennstoffeinspritzventile sind teilweise in Bohrungen 11, 12, 13 der Anbaustruktur 5 einfügbar. In diesem Fall handelt es sich bei der Anbaustruktur 5 um einen Zylinderkopf 5 einer Brennkraftmaschine. Es sind allerdings auch andere Ausgestaltungen denkbar, so dass die Anbaustruktur 5 nicht auf einen Zylinderkopf beziehungsweise auf eine Brennkraftmaschine beschränkt ist. Ferner können Brennstoffeinspritzventile auch auf andere Weise als über die dargestellten Tassen 8, 9, 10 mit dem Verteilerrohr 4 verbunden werden. Ferner kann auch ein weiteres Verteilerrohr an der gleichen Brennkraftmaschine angebracht werden. Hierdurch kann beispielsweise eine Ausgestaltung der Brennstoffeinspritzanlage 1 für einen Motor mit sechs Zylindern erzielt werden.

Somit kann der Brennstoffverteiler 2 zuverlässig mittels der Halter 3, 3A, 3B, 3C an der Anbaustruktur 5 befestigt werden. Die Anzahl der Halter 3, 3A, 3B, 3C kann hierbei in Bezug auf den jeweiligen Anwendungsfall geeignet gewählt werden. Im Folgenden ist die Ausgestaltung des Halters 3 entsprechend möglicher Ausführungsbeispiele in weiterem Detail erläutert. Je nach Anwendungsfall können hierbei mehrere solcher Halter 3 zum Einsatz kommen. Hierbei können baugleiche Halter 3 oder auch unterschiedliche Halter 3 zum Einsatz kommen. Ferner eignen sich solche Halter 3 auch zur Befestigung anderer rohrförmiger Bauteile an einer geeigneten Anbaustruktur 5.

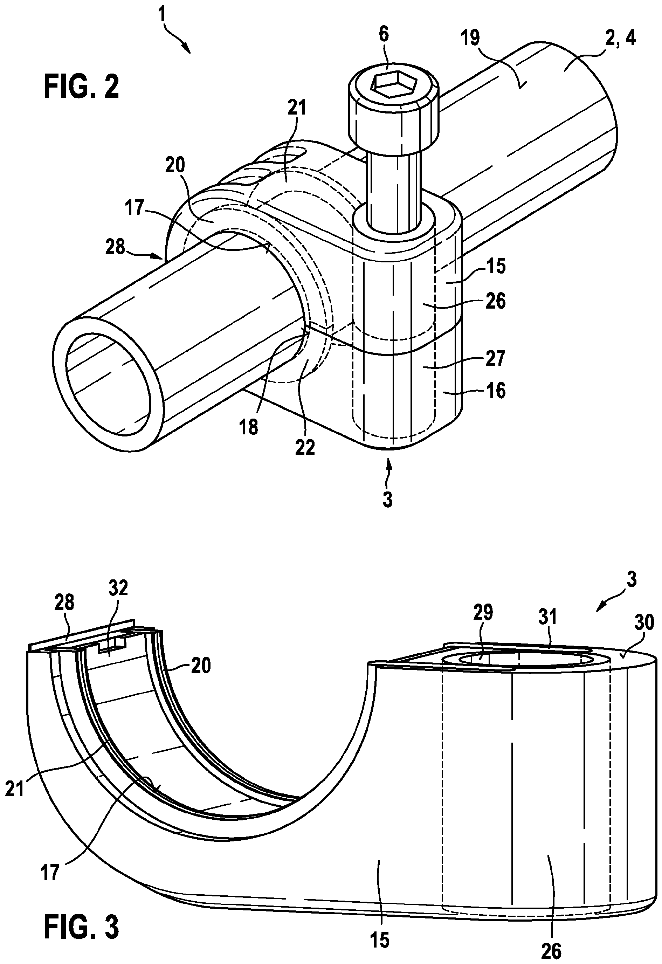

Fig. 2 zeigt eine auszugsweise, räumliche Darstellung der in Fig. 1 gezeigten Brennstoffeinspritzanlage 1 entsprechend einem ersten Beispiel während der Montage. Der Halter 3 weist eine erste Halbschale 15 und eine zweite Halbschale 16 auf. Die erste Halbschale 15 weist einen Haltebereich 17 auf. Die zweite Halbschale 16 weist einen Haltebereich 18 auf. Die Halbschalen 15, 16 umschließen mit ihren Haltebereichen 17, 18 eine Außenseite 19 des Verteilerrohrs 4. Hierbei besteht allerdings kein direkter Kontakt zwischen den Halbschalen 15, 16 und dem Verteilerrohr 4. An den Haltebereich 17 der ersten Halbschale 15 sind elastisch verformbare Dämpfungselemente 20, 21 gespritzt. Die erste Halbschale 15 wirkt dadurch im montierten Zustand über die Dämpfungselemente 20, 21 auf die Außenseite 19 des Verteilerrohrs 4 ein. Entsprechend sind an den Haltebereich 18 der zweiten Halbschale 16 ein Dämpfungselement 22 und ein nicht dargestelltes weiteres Dämpfungselement gefügt. Über diese Dämpfungselemente 22 wirkt die zweite Halbschale 16 auf die Außenseite 19 des Verteilerrohrs 4 ein, wenn der Halter 3 montiert ist.

Die Dämpfungselemente 20, 22 sind jeweils teilringförmig ausgestaltet und ergänzen sich im montierten Zustand zu einem Ring, der die Außenseite 19 des Verteilerrohrs 4 umschließt. Entsprechend ergänzen sich auch das Dämpfungselement 21 und das weitere, nicht dargestellte Dämpfungselement zu einem Ring.

Die Schraube 6 befindet sich in einer Vormontageposition, die in der Fig. 2 veranschaulicht ist. Die Positionierung der Schraube 6 in der Vormontageposition erfolgt durch einen Haltesteg der ersten Halbschale 15 oder durch eine Anspritzung aus dem Werkstoff der Dämpfungselemente 20, 21.

Ferner weisen die Halbschalen 15, 16 jeweils eine metallische Hülse 26, 27 auf, die in den Halbschalen 15, 16 angeordnet und umspritzt sind. Durch die metallischen Hülsen 26, 27 ist die Stabilität der Befestigung weiter verbessert. Durch Einschrauben der Schraube 6 werden die Halbschalen 15, 16 gegeneinander beaufschlagt und mit der Anbaustruktur 5 verbunden.

In diesem Beispiel sind die erste Halbschale 15 und die zweite Halbschale 16 geometrisch gleich ausgestaltet. Hierbei können die Halbschalen 15, 16 als separate Teile ausgestaltet sein. Die Halbschalen 15, 16 sind allerdings vorzugsweise über ein Filmscharnier 28 miteinander verbunden.

Fig. 3 zeigt eine Halbschale 15 des in Fig. 2 dargestellten Halters 3 in einer räumlichen Darstellung entsprechend einem Ausführungsbeispiel. Die Ausgestaltung ist hierbei anhand der Halbschale 15 beschrieben. Die Halbschale 16 kann entsprechend ausgestaltet sein. Beispielsweise kann eine Anspritzung 29 an einer Innenseite 30 der Halbschale 15 aus dem Werkstoff der Dämpfungselemente 20, 21 realisiert werden. Auch die Ausgestaltung eines Haltestegs 31 an der Halbschale 15 ist möglich. Durch die Anspritzung 29 oder den Haltesteg 31 ist eine Schraubensicherung für die Vormontage möglich.

In diesem Ausführungsbeispiel sind die Dämpfungselemente 20, 21 jeweils mit mehreren Lippen ausgestaltet. Somit sind die elastisch verformbaren Dämpfungselemente 20, 21, die an den Haltebereich 17 der Halbschale 15 angespritzt sind, teilringförmig und lippenförmig ausgestaltet. In diesem Ausführungsbeispiel sind die Dämpfungselemente 20, 21 ferner über eine flächige Anspritzung 32 aus dem Werkstoff der Dämpfungselemente 20, 21 miteinander verbunden.

In entsprechender Weise kann auch eine vollflächige Ausgestaltung eines Dämpfungselements realisiert werden. Auch eine streifenförmige Ausgestaltung, wie sie anhand der Fig. 2 beschrieben ist, ist möglich. Ferner ist auch eine Kombination solcher Ausgestaltungen denkbar.

In der Fig. 3 ist eine erfindungsgemäße Ausgestaltung des Filmscharniers 28 an der Halbschale 15 veranschaulicht. Über das Filmscharnier 28 können die Halbschalen 15, 16 miteinander verbunden sein.

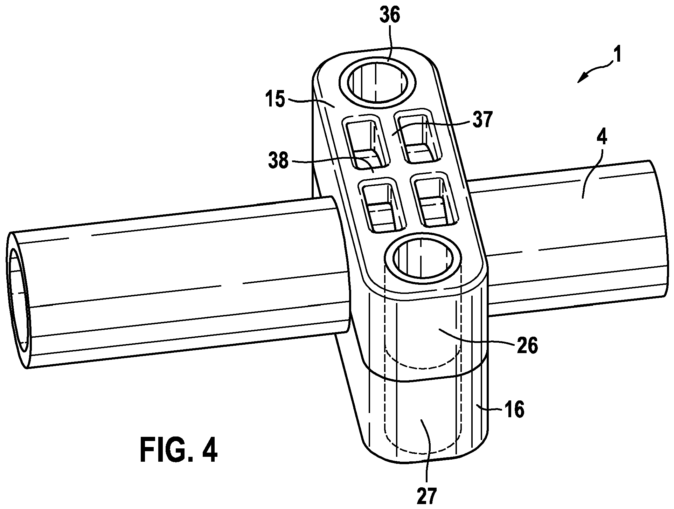

Fig. 4 zeigt die in Fig. 2 auszugsweise dargestellte Brennstoffeinspritzanlage 1 in einer räumlichen Darstellung entsprechend einem dritten Beispiel. In diesem Beispiel weist die erste Halbschale 15 die metallische Hülse 26 und eine weitere metallische Hülse 36 auf. Entsprechend weist die zweite Halbschale 16 eine weitere metallische Hülse auf, die in der Fig. 4 nicht dargestellt ist. Die weitere metallische Hülse 36 der ersten Halbschale 15 und die weitere metallische Hülse der zweiten Halbschale 16 sind hierbei jeweils von dem Werkstoff der Halbschalen 15, 16 umspritzt. Die metallische Hülse 26 und die weitere metallische Hülse 36 der ersten Halbschale 15 sind bezüglich des zumindest einen elastischen Dämpfungselements 20, 21 gegenüberliegend zueinander angeordnet. Im montierten Zustand bedeutet dies, dass die metallische Hülse 26 und die weitere metallische Hülse 36 bezüglich des gehaltenen Verteilerrohrs 4 gegenüberliegend zueinander angeordnet sind. Entsprechend sind die metallische Hülse 27 und die nicht dargestellte weitere metallische Hülse der zweiten Halbschale 16 bezüglich des zumindest einen elastischen Dämpfungselements 22 beziehungsweise des Verteilerrohrs 4 gegenüberliegend zueinander angeordnet. Die Montage erfolgt in diesem Ausführungsbeispiel mit zwei Schrauben. Von diesen Schrauben greift zumindest eine in die Anbaustruktur 5 ein. Somit ergibt sich eine verbesserte Verteilung der Lasten.

Die Halbschale 15 kann außerdem Versteifungsrippen 37, 38 aufweisen, die zu einer Minderung der Bauteilspannungen führen. Somit kann durch die Formgebung im Spritzgussverfahren die Halbschale 15 so ausgebildet beziehungsweise versteift werden, dass die Formsteifigkeit den auftretenden Belastungen angepasst ist. Entsprechend kann die zweite Halbschale 16 ausgestaltet werden.

Die Erfindung ist nicht auf die beschriebenen Ausführungsbeispiele beschränkt.

## Patentansprüche

1. Brennstoffeinspritzanlage (1) mit einem Brennstoffverteiler (2), der ein Verteilerrohr (4) aufweist, und zumindest einem Halter (3), der zum Befestigen des Brennstoffverteilers (2) an einer Anbaustruktur (5) mit zumindest einem elastisch verformbaren Dämpfungselement (20, 21, 22) dient,
wobei eine erste Halbschale (15) und eine zweite Halbschale (16) vorgesehen sind,
wobei die erste Halbschale (15) und die zweite Halbschale (16) zum Befestigen des rohrförmigen Bauteils (4) an der Anbaustruktur (5) so aneinander fügbar sind, dass die erste Halbschale (15) und die zweite Halbschale (16) das rohrförmige Bauteil (4) umschließen und das rohrförmige Bauteil (4) mittels der elastischen Dämpfungselemente (20, 22) halten, wobei in den beiden Halbschalen (15, 16) jeweils mindestens eine Bohrung zum Einbringen einer Schraube (6) vorgesehen ist und die Schraube (6) in eine Gewindebohrung (7) in der Anbaustruktur (5) zum Befestigen des Brennstoffverteilers (2) an der Anbaustruktur (5) schraubbar ist,
**dadurch gekennzeichnet,**
**dass** das elastisch verformbare Dämpfungselement (20) an einen Haltebereich (17) der ersten Halbschale (15) angespritzt oder in den Haltebereich (17) der ersten Halbschale (15) eingelegt ist, dass ein elastisch verformbares Dämpfungselement (22) an einen Haltebereich (18) der zweiten Halbschale (16) angespritzt oder in den Haltebereich (18) der zweiten Halbschale (16) eingelegt ist und dass die erste Halbschale (15) und die zweite Halbschale (16) mittels eines Filmscharniers (28) miteinander verbunden sind.

2. Brennstoffeinspritzanlage nach Anspruch 1,
**dadurch gekennzeichnet,**
**dass** die erste Halbschale (15) und die zweite Halbschale (16) geometrisch zumindest näherungsweise gleich ausgestaltet sind.

3. Brennstoffeinspritzanlage nach einem der Ansprüche 1 oder 2,
**dadurch gekennzeichnet,**
**dass** das elastisch verformbare Dämpfungselement (20), das an den Haltebereich (17) der ersten Halbschale (15) angespritzt oder in den Haltebereich (17) der ersten Halbschale (15) eingelegt ist, teilringförmig ausgestaltet ist und/oder streifen- oder lippenförmig oder vollflächig ausgestaltet ist und/oder dass das elastisch verformbare Dämpfungselement (22), das an den Haltebereich (18) der zweiten Halbschale (16) angespritzt oder in den Haltebereich (18) der zweiten Halbschale (16) eingelegt ist, teilringförmig ausgestaltet ist und/oder streifen- oder lippenförmig oder vollflächig ausgestaltet ist.

4. Brennstoffeinspritzanlage nach Anspruch 3,
**dadurch gekennzeichnet,**
**dass** das elastisch verformbare Dämpfungselement (20), das an den Haltebereich (17) der ersten Halbschale (15) angespritzt oder in den Haltebereich (17) der ersten Halbschale (15) eingelegt ist, und das elastisch verformbare Dämpfungselement (22), das an den Haltebereich (18) der zweiten Halbschale (16) angespritzt oder in den Haltebereich (18) der zweiten Halbschale (16) eingelegt ist, das rohrförmige Bauteil (4) ringförmig umschließen, wenn die erste Halbschale (15) und die zweite Halbschale (16) zum Befestigen des rohrförmigen Bauteils (4) aneinander gefügt sind.

5. Brennstoffeinspritzanlage nach einem der Ansprüche 1 bis 4,
**dadurch gekennzeichnet,**
**dass** an den Haltebereich (17) der ersten Halbschale (15) mehrere elastisch verformbare Dämpfungselemente (20, 21) angespritzt sind und/oder dass in den Haltebereich (17) der ersten Halbschale (15) mehrere elastisch verformbare Dämpfungselemente (20, 21) eingelegt sind und/oder dass an den Haltebereich (18) der zweiten Halbschale (16) mehrere elastisch verformbare Dämpfungselemente (22) angespritzt sind und/oder dass in den Haltebereich (18) der zweiten Halbschale (16) mehrere elastisch verformbare Dämpfungselemente (22) eingelegt sind.

6. Brennstoffeinspritzanlage nach einem der Ansprüche 1 bis 5,
**dadurch gekennzeichnet,**
**dass** eine metallische Hülse (26) in der Bohrung der ersten Halbschale (15) angeordnet und umspritzt ist und dass eine metallische Hülse (27) in der Bohrung der zweiten Halbschale (16) angeordnet und umspritzt ist.

7. Brennstoffeinspritzanlage nach Anspruch 6,
**dadurch gekennzeichnet,**
**dass** die Schraube (6) derart vorgesehen ist, dass diese in der metallischen Hülse (26) der ersten Halbschale (15) durch einen Haltesteg (31) der ersten Halbschale (15) oder durch eine Anspritzung (29) aus dem Werkstoff des Dämpfungselements (20) in einer Vormontageposition positionierbar ist.

8. Brennstoffeinspritzanlage nach einem der Ansprüche 1 bis 7,
**dadurch gekennzeichnet,**
**dass** eine weitere metallische Hülse (36) in der ersten Halbschale (15) angeordnet und umspritzt ist, dass die metallische Hülse (26) und die weitere metallische Hülse (36) der ersten Halbschale (15) bezüglich des elastischen Dämpfungselements (20) gegenüberliegend zueinander angeordnet sind, dass eine weitere metallische Hülse in der zweiten Halbschale (16) angeordnet und umspritzt ist und dass die metallische Hülse (27) und die weitere metallische Hülse der zweiten Halbschale (16) bezüglich des elastischen Dämpfungselements (22) gegenüberliegend zueinander angeordnet sind.

## Claims

1. Fuel injection system (1) with a fuel distributor (2) which has a distributor tube (4), and with at least one holder (3) which serves for fastening the fuel distributor (2) to an add-on structure (5) with at least one elastically deformable damping element (20, 21, 22), wherein a first half shell (15) and a second half shell (16) are provided, wherein, for fastening the tubular component (4) to the add-on structure (5), the first half shell (15) and the second half shell (16) can be joined to each other in such a manner that the first half shell (15) and the second half shell (16) surround the tubular component (4) and hold the tubular component (4) by means of the elastic damping elements (20, 22), wherein at least one bore for the introduction of a screw (6) is provided in each of the two half shells (15, 16) and the screw (6) is screwable into a threaded bore (7) in the add-on structure (5) in order to fasten the fuel distributor (2) to the add-on structure (5),
**characterized**
**in that** the elastically deformable damping element (20) is injection moulded onto a holding region (17) of the first half shell (15) or is placed into the holding region (17) of the first half shell (15), in that an elastically deformable damping element (22) is injection moulded onto a holding region (18) of the second half shell (16) or placed into the holding region (18) of the second half shell (16), and in that the first half shell (15) and the second half shell (16) are connected to each other by means of a film hinge (28).

2. Fuel injection system according to Claim 1,
**characterized**
**in that** the first half shell (15) and the second half shell (16) are of geometrically at least approximately identical configuration.

3. Fuel injection system according to either of Claims 1 and 2,
**characterized**
**in that** the elastically deformable damping element (20) which is injection moulded onto the holding region (17) of the first half shell (15) or is placed into the holding region (17) of the first half shell (15) is of partially annular configuration and/or is configured in a strip-shaped or lip-shaped manner or with a full surface area, and/or in that the elastically deformable damping element (22) which is injection moulded onto the holding region (18) of the second half shell (16) or placed into the holding region (18) of the second half shell (16) is of partially annular configuration and/or is configured in a strip-shaped or lip-shaped manner or with a full surface area.

4. Fuel injection system according to Claim 3,
**characterized**
**in that** the elastically deformable damping element (20) which is injection moulded onto the holding region (17) of the first half shell (15) or placed into the holding region (17) of the first half shell (15), and the elastically deformable damping element (22) which is moulded onto the holding region (18) of the second half shell (16) or placed into the holding region (18) of the second half shell (16) annularly surround the tubular component (4) when the first half shell (15) and the second half shell (16) are joined to each other in order to fasten the tubular component (4).

5. Fuel injection system according to one of Claims 1 to 4,
**characterized**
**in that** a plurality of elastically deformable damping elements (20, 21) are injection moulded onto the holding region (17) of the first half shell (15), and/or in that a plurality of elastically deformable damping elements (20, 21) are placed into the holding region (17) of the first half shell (15), and/or in that a plurality of elastically deformable damping elements (22) are injection moulded onto the holding region (18) of the second half shell (16), and/or in that a plurality of elastically deformable damping elements (22) are placed into the holding region (18) of the second half shell (16).

6. Fuel injection system according to one of Claims 1 to 5,
**characterized**
**in that** a metallic sleeve (26) is arranged and insert moulded in the bore of the first half shell (15), and in that a metallic sleeve (27) is arranged and insert moulded in the bore of the second half shell (16).

7. Fuel injection system according to Claim 6,
**characterized**
**in that** the screw (6) is provided in such a manner that said screw can be positioned in a pre-assembly position in the metallic sleeve (26) of the first half shell (15) by a holding web (31) of the first half shell (15) or by an injection-moulded extension (29) from the material of the damping element (20).

8. Fuel injection system according to one of Claims 1 to 7,
**characterized**
**in that** a further metallic sleeve (36) is arranged and insert moulded in the first half shell (15), in that the metallic sleeve (26) and the further metallic sleeve (36) of the first half shell (15) are arranged lying opposite each other with respect to the elastic damping element (20), in that a further metallic sleeve is arranged and insert moulded in the second half shell (16), and in that the metallic sleeve (27) and the further metallic sleeve of the second half shell (16) are arranged lying opposite each other with respect to the elastic damping element (22).

## Revendications

1. Système d'injection de carburant (1) comprenant un distributeur de carburant (2) qui présente un tube de distribution (4), et au moins un dispositif de retenue (3) qui sert à fixer le distributeur de carburant (2) à une structure de montage (5) avec au moins un élément d'amortissement déformable élastiquement (20, 21, 22),
une première demi-coque (15) et une deuxième demi-coque (16) étant prévues,
la première demi-coque (15) et la deuxième demi-coque (16) pouvant être assemblées l'une à l'autre pour la fixation du composant tubulaire (4) à la structure de montage (5) de telle sorte que la première demi-coque (15) et la deuxième demi-coque (16) entourent le composant tubulaire (4) et retiennent le composant tubulaire (4) au moyen des éléments d'amortissement élastiques (20, 22), à chaque fois au moins un alésage étant prévu dans les deux demi-coques (15, 16) pour l'introduction d'une vis (6) et la vis (6) pouvant être vissée dans un alésage fileté (7) dans la structure de montage (5) pour la fixation du distributeur de carburant (2) à la structure de montage (5),
**caractérisé en ce que**
l'élément d'amortissement déformable élastiquement (2) est surmoulé sur une région de retenue (17) de la première demi-coque (15) ou est introduit dans la région de retenue (17) de la première demi-coque (15), **en ce qu'**un élément d'amortissement déformable élastiquement (22) est surmoulé sur une région de retenue (18) de la deuxième demi-coque (16) ou est introduit dans la région de retenue (18) de la deuxième demi-coque (16) et **en ce que** la première demi-coque (15) et la deuxième demi-coque (16) sont assemblées l'une à l'autre au moyen d'une charnière à film (28).

2. Système d'injection de carburant selon la revendication 1,
**caractérisé en ce que**
la première demi-coque (15) et la deuxième demi-coque (16) sont configurées au moins approximativement de manière identique du point de vue géométrique.

3. Système d'injection de carburant selon l'une quelconque des revendications 1 ou 2,
**caractérisé en ce que**
l'élément d'amortissement déformable élastiquement (20) qui est surmoulé sur la région de retenue (17) de la première demi-coque (15) ou qui est introduit dans la région de retenue (17) de la première demi-coque (15) est configuré sous forme de bague partielle et/ou sous forme de bande ou de lèvre ou sur toute la surface et/ou **en ce que** l'élément d'amortissement déformable élastiquement (22) qui est surmoulé sur la région de retenue (18) de la deuxième demi-coque (16) ou qui est introduit dans la région de retenue (18) de la deuxième demi-coque (16) est configuré sous forme de bague partielle et/ou est configuré sous forme de bande ou de lèvre ou sur toute sa surface.

4. Système d'injection de carburant selon la revendication 3,
**caractérisé en ce que**
l'élément d'amortissement déformable élastiquement (20) qui est surmoulé sur la région de retenue (17) de la première demi-coque (15) ou qui est introduit dans la région de retenue (17) de la première demi-coque (15) et l'élément d'amortissement déformable élastiquement (22) qui est surmoulé sur la région de retenue (18) de la deuxième demi-coque (16) ou qui est introduit dans la région de retenue (18) de la deuxième demi-coque (16) entourent sous forme annulaire le composant tubulaire (4) lorsque la première demi-coque (15) et la deuxième demi-coque (16) sont assemblées l'une à l'autre pour la fixation du composant tubulaire (4).

5. Système d'injection de carburant selon l'une quelconque des revendications 1 à 4,
**caractérisé en ce que**
plusieurs éléments d'amortissement déformables élastiquement (20, 21) sont surmoulés sur la région de retenue (17) de la première demi-coque (15) et/ou **en ce que** plusieurs éléments d'amortissement déformables élastiquement (20, 21) sont introduits dans la région de retenue (17) de la première demi-coque (15) et/ou **en ce que** plusieurs éléments d'amortissement déformables élastiquement (22) sont surmoulés sur la région de retenue (18) de la deuxième demi-coque (16) et/ou en ce que plusieurs éléments d'amortissement déformables élastiquement (22) sont introduits dans la région de retenue (18) de la deuxième demi-coque (16).

6. Système d'injection de carburant selon l'une quelconque des revendications 1 à 5,
**caractérisé en ce**
**qu'**une douille métallique (26) est disposée et surmoulée dans l'alésage de la première demi-coque (15) et en ce qu'une douille métallique (27) est disposée et surmoulée dans l'alésage de la deuxième demi-coque (16).

7. Système d'injection de carburant selon la revendication 6,
**caractérisé en ce que**
la vis (6) est prévue de telle sorte que celle-ci puisse être positionnée dans une position de pré-montage dans la douille métallique (26) de la première demi-coque (15) par une nervure de retenue (31) de la première demi-coque (15) ou par un surmoulage (29) constitué du matériau de l'élément d'amortissement (20).

8. Système d'injection de carburant selon l'une quelconque des revendications 1 à 7,
**caractérisé en ce**
**qu'**une douille métallique supplémentaire (36) est disposée et surmoulée dans la première demi-coque (15), en ce que la douille métallique (26) et la douille métallique supplémentaire (36) de la première demi-coque (15) sont disposées à l'opposé l'une de l'autre par rapport à l'élément d'amortissement élastique (20), en ce qu'une douille métallique supplémentaire est disposée et surmoulée dans la deuxième demi-coque (16) et en ce que la douille métallique (27) et la douille métallique supplémentaire de la deuxième demi-coque (16) sont disposées à l'opposé l'une de l'autre par rapport à l'élément d'amortissement élastique (22).
